# EUROPÄISCHE PATENTSCHRIFT

(11) **EP 4 698 580 B1**
(45) Veröffentlichungstag und Bekanntmachung des Hinweises auf die Patenterteilung: **14.10.2026**
(21) Anmeldenummer: 23723420.8
(22) Anmeldetag: 21.04.2023
(51) Int. Cl.: C08G 65/336, C08L 71/02

(54) **VERNETZBARE ZUSAMMENSETZUNGEN AUF BASIS VON SILANVERNETZENDEN ORGANISCHEN POLYMEREN MIT HOHER WÄRMELEITFÄHIGKEIT**
CROSSLINKABLE COMPOSITIONS BASED ON SILANE-CROSSLINKING ORGANIC POLYMERS WITH HIGH THERMAL CONDUCTIVITY
COMPOSITIONS RÉTICULABLES À BASE DE POLYMÈRES ORGANIQUES DE RÉTICULATION AU SILANE À THERMOCONDUCTIVITÉ ÉLEVÉE

(43) Veröffentlichungstag der Anmeldung: 25.02.2026
(73) Patentinhaber: Wacker Chemie AG, 81671 München (DE)
(72) Erfinder: STANJEK, Volker, 81671 München (DE); KNÖR, Sebastian, 81671 München (DE); ZANDER, Lars, 81671 München (DE)
(74) Vertreter: Mieskes, Klaus Theoderich
(86) Internationale Anmeldenummer: PCT/EP2023/060410
(87) Internationale Veröffentlichungsnummer: WO 2024/217693

(56) Entgegenhaltungen:
- EP-B1- 3 371 270
- EP-B1- 3 924 428

## Beschreibung

Die Erfindung betrifft vernetzbare Zusammensetzungen mit hoher Wärmeleitfähigkeit auf Basis von silanvernetzenden Polymeren, Verfahren zu deren Herstellung und deren Verwendung.

Wärmeleitfähige Zusammensetzungen finden breite Anwendung für das Thermomanagement in der Automobil- und Elektronikindustrie. Wichtige Darreichungsformen umfassen beispielsweise wärmeleitfähige Klebstoffe und Vergussmassen. Eine weitere wichtige Anwendung sind sogenannte Gap Filler, insbesondere für Lithium-Ionen-Batterien. Gap Filler sind wärmeleitfähige Elastomere, die Spalten und Hohlräume in dem jeweiligen Bauelement vollständig und dauerhaft ausfüllen und den thermischen Widerstand beispielsweise zwischen elektronischen Bauteilen und Kühlgehäusen oder Kühlkörpern minimieren.

Als Bindemittel für wärmeleitfähige Zusammensetzungen werden oftmals Silicon-Elastomere verwendet. Diese besitzen den Vorteil, vergleichsweise temperaturbeständig zu sein und der thermischen Belastung, der wärmeleitfähige Zusammensetzungen in ihrer Endanwendung oftmals ausgesetzt sind, sehr gut standhalten zu können. Zudem sind verschiedene Härtungsmechanismen wie z.B. Silankondensation, Hydrosilylierung oder auch peroxidische Vernetzungen bekannt, die eine Applikation der Zusammensetzung im flüssigen oder pastösen Zustand mit anschließender Aushärtung zu einem Material mit den gewünschten elastomeren Eigenschaften erlauben. Entsprechende Systeme sind beispielsweise in US2016122611 oder WO2022/161634 beschrieben.

Jedoch sind Silicone in vielen Anwendungen nicht erwünscht, da die in ihnen enthaltenen Polydimethylsiloxanketten extrem oberflächenaktiv sind und die Haftung von Bauteilen oder weiteren Beschichtungsmaterialien drastisch verringern können. Vor allem beim Auftrag von Farbschichten oder Lackierungen reichen minimale Polydimethylsiloxanspuren aus, um zu massiven Beschichtungs- bzw. Lackfehlern zu führen. Da kürzere Polydimethylsiloxanketten zudem eine gewisse Flüchtigkeit aufweisen und sich daher über Belüftungs- oder Klimaanlagen in Gebäudekomplexe auch über große Entfernungen verbreiten können, existiert insbesondere in der Autoindustrie in vielen Fertigungsbereichen ein strikter Bann für die gesamte Stoffgruppe.

Eine Alternativtechnologie zu siliconbasierenden Produkten könnte ein Einsatz von Bindemitteln auf Basis von sogenannten Hybridpolymeren darstellen, d.h. von Polymeren mit einem organischen Rückgrat, die über reaktive und vernetzungsfähige Alkoxysilylgruppen verfügen.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren.

Eine der wichtigsten etablierten Anwendungen von derartigen Materialien ist die Herstellung von Kleb- und Dichtstoffen für Bauanwendungen. So zeigen Kleb- und Dichtstoffe auf Basis von alkoxysilanvernetzenden Polymeren im ausgehärteten Zustand nicht nur gute Haftungseigenschaften auf nahezu allen anorganischen Substraten, die im Baubereich Verwendung finden, sondern auch sehr gute mechanische Eigenschaften.

Ein weiterer Vorteil silanvernetzender Systeme gegenüber zahlreichen anderen bei Raumtemperatur härtbaren Produkten (z.B. gegenüber isocyanatvernetzenden Systemen) ist die toxikologische Unbedenklichkeit der Prepolymere.

Neben sogenannten einkomponentigen Produkten, die mit der Luftfeuchtigkeit und/oder Wasserspuren in den Substraten, auf denen sie appliziert wurden, reagieren und aushärten, existieren auch sogenannte zweikomponentige Systeme. Diese härten aus, sobald zwei Komponenten miteinander vermischt werden, von denen eine Komponente meist das silanvernetzende Polymer und die zweite ein in geeigneter Form verfügbares Wasser enthält. Letzteres kann gelöst, emulgiert, auf der Oberfläche von geeigneten Füllstoffen (z.B. Zeolithen) absorbiert oder auch chemisch reversibel gebunden sein.

Silanvernetzende Polymere sind dem Fachmann seit Jahrzehnten bekannt und werden von zahlreichen Herstellern angeboten.

Eine erste besondere Variante dieser Technologie besteht im Einsatz von sogenannten α-silanterminierten Prepolymeren. Diese verfügen über reaktive Alkoxysilylgruppen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei Luftkontakt hohe Aushärtgeschwindigkeiten zu erreichen. Kommerziell verfügbare α-silanterminierte Prepolymere sind GENIOSIL^{®} STP-E10 oder -E30 der Wacker Chemie AG.

Eine zweite besondere Variante, welche insbesondere für Klebstoffe auf Basis silanvernetzender Polymere interessant ist, ist beispielsweise in US2014155545A, korrespondierend zu EP2744842A, beschrieben, die neben den silanvernetzenden Polymeren auch noch Phenylsiliconharze enthalten. Die entsprechenden Harzzusätze führen auch zu Produkten, die nach ihrer vollständigen Aushärtung eine wesentlich höhere Härte aufweisen. Eine dritte besondere Variante, welche insbesondere für Dichtstoffe auf Basis silanvernetzender Polymere interessant ist, ist beispielsweise in US2017198101A, korrespondierend zu EP3149095A, beschrieben. Dort werden neben den üblichen, vorzugsweise linearen silanvernetzenden Polymeren, die an beiden Kettenenden über eine vernetzbare Silanfunktion enthalten, auch Produkte beschrieben, die nur an einem Kettenende über reaktive Silangruppen verfügen.

Trotz ihrer weiten Verbreitung als konventionelle Kleb- und Dichtstoffe, die vor allem im Baubereich Anwendung finden, existieren nur sehr vereinzelt Beschreibungen von Systemen auf Basis silanvernetzender Polymere mit hoher Wärmeleitfähigkeit. Eines dieser seltenen Erwähnungen findet sich in Beispiel 5 von US2022119593A, korrespondierend zu EP3924428A. Dort wird eine spezielle Füllstoffmischung aus sphärischen Aluminiumoxidpartikeln, calcinierten Aluminiumoxidpartikeln und Zinkoxid eingesetzt. Der Füllgrad ist mit 90% sehr hoch. Derart hohe Füllgrade mit speziellen Füllstoffmischungen ist für das Erreichen einer hohen Wärmeleitfähigkeit unerlässlich, da die silanterminierten Polymere selbst nur eine sehr geringe Wärmeleitfähigkeit aufweisen, die in der Größenordnung von 0,15-0,20 W/mK liegt.

Das in Beispiel 5 von US2022119593A, korrespondierend zu EP3924428A, beschriebene zweikomponentige System weist eine Wärmeleitfähigkeit 2,8-2,9 W/mK auf. Dies ist eine durchaus beachtliche Größenordnung. Für viele Anwendungen, z.B. für Hochleistungsbatterien, wären jedoch noch höhere Wärmeleitfähigkeiten wünschenswert.

Dokument EP3371270B1 offenbart vernetzbare Massen enthaltend Komponenten der allgemeinen Formel
Y-[(CR₂)ₓ-SiRₐ(OR)₃₋ₐ]_{z} sowie Siliconharze und Ruß.

Aufgabe der Erfindung war somit die Entwicklung von Zusammensetzungen auf Basis von silanvernetzenden Polymeren mit organischem, d.h. nicht polysiloxanhaltigen Rückgrat, mit einer gegenüber dem Stand der Technik nochmals verbesserten Wärmeleitfähigkeit.

Diese Aufgabe wurde überraschenderweise von der vorliegenden Erfindung gelöst.

**Gegenstand dieser Erfindung sind vernetzbare, wärmeleitfähige Massen (M)** enthaltend
- 100 Gewichtsteile mindestens einer Verbindungen (A) der Formel

   Y-[(CR¹₂)_{b}-SiRₐ(OR²)₃₋ₐ]ₓ (I),

   wobei
   Y einen x-wertigen, über Stickstoff, Sauerstoff, Schwefel oder Kohlenstoff gebundenen organischen Polymerrest bedeutet,
   R gleich oder verschieden sein kann und einen einwertigen, gegebenenfalls substituierten Kohlenwasserstoffrest darstellt, R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder eine Carbonylgruppe an das Kohlenstoffatom angebunden sein kann,
   R² gleich oder verschieden sein kann und Wasserstoffatom oder einen einwertigen, gegebenenfalls substituierten Kohlenwasserstoffrest darstellt,
   x eine ganze Zahl von 1 bis 10, bevorzugt 1, 2 oder 3, besonders bevorzugt 1 oder 2, ist,
   a gleich oder verschieden sein kann und 0, 1 oder 2, bevorzugt 0 oder 1, ist und
   b gleich oder verschieden sein kann und eine ganze Zahl von 1 bis 10, bevorzugt 1, 3 oder 4, besonders bevorzugt 1 oder 3, insbesondere 1, ist, und
   100 bis 1900 Gewichtsteilen mindestens eines Füllstoffes (B),
   wobei mindestens 30 Gew.-% aller Füllstoffe (B) aus metallischen Siliziumpartikeln (B1) bestehen.

Im Rahmen dieser Erfindung sind die Begriffe wärmeleitfähig, thermoleitfähig oder thermisch leitfähig gleichbedeutend.

Um die Seitenzahl der Beschreibung der vorliegenden Erfindung nicht zu umfangreich zu gestalten, werden im Folgenden nur die bevorzugten Ausführungsformen der einzelnen Merkmale aufgeführt.

Der fachkundige Leser soll diese Art der Offenbarung aber explizit so verstehen, dass damit auch jede Kombination aus unterschiedlichen Bevorzugungsstufen explizit offenbart und explizit gewünscht ist.

Der Erfindung liegt die überraschende Entdeckung zugrunde, dass die erfindungsgemäßen Siliziumpartikel (B1) in der Lage sind, die thermische Leitfähigkeit der vernetzbaren Massen (M) gegenüber den im Stand der Technik erreichten Werten noch einmal signifikant zu verbessern. Gleichzeitig erlauben sie durch ihre geringe Dichte die Bereitstellung von thermoleitfähigen Massen (M) mit vergleichsweise niedriger Dichte.

### Verbindung (A)

Beispiele für Reste R in der Formel (I) sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder eine Carbonylgruppe an das Kohlenstoffatom gebundene, gegebenenfalls substituierte Kohlenwasserstoffreste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Beispiele für Rest R² sind Wasserstoffatom und die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Als Polymere, welche dem organischen Polymerrest Y zugrunde liegen, sind im Sinne der vorliegenden Erfindung alle Polymere zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind. Insbesondere bevorzugt bestehen alle Bindungen in der Hauptkette der Polymerreste Y aus Kohlenstoff-Kohlenstoff-, Kohlenstoff-Stickstoff- oder Kohlenstoff-Sauerstoff-Bindungen.

Silicone, deren Rückgrat im Wesentlichen, d.h. zu mindestens 50% aller Bindungen aus Silizium-Sauerstoff-Bindungen bestehen, sind explizit keine Polymere, welche dem Polymerrest Y zugrunde liegen.

Beispiele für Polymerreste Y sind Polyester-, Polyether-, Polyurethan-, Polyalkylen- und Polyacrylatreste.

Bei Polymerrest Y handelt es sich bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyacrylate; Polymethacrylate; Vinylpolymer oder Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR'- an die Gruppe bzw. Gruppen -[(CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butylrest, die diversen Sterioisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Die Komponente (A) kann dabei die auf die beschriebene Weise angebundenen Gruppen -[(CR¹₂)_{b}-SiRₐ(OR²)₃₋ₐ] an beliebigen Stellen im Polymer aufweisen, wie etwa kettenständig und/oder endständig.

Besonders bevorzugt handelt es sich bei Rest Y in Formel (I) um x-wertige, über Stickstoff, Sauerstoff, Schwefel oder Kohlenstoff gebundene organische Polymerreste, die als Polymerkette Polyurethane oder Polyoxyalkylene enthalten, insbesondere um Polyurethanreste mit endständig angebundenen Gruppen -[(CR¹₂)_{b}-SiRₐ(OR²)₃₋ₐ] oder Polyoxyalkylenreste mit endständig angebundenen Gruppen -[(CR¹₂)_{b}-SiRₐ(OR²)₃₋ₐ], wobei die Reste und Indizes die oben genannten Bedeutungen haben. Die Reste Y sind vorzugsweise linear oder weisen 1 bis 3 Verzweigungsstellen auf. Besonders bevorzugt sind sie linear.

Bei den Polyurethanresten Y handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen -[(CR¹₂)_{b}-SiRₐ(OR²)₃₋ₐ] gebunden sind, wobei sämtliche Reste und Indizes eine der o.g. Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar. Die Reste Y weisen dabei vorzugsweise mittlere Molmassen Mₙ (Zahlenmittel) von 400 bis 30 000 g/mol, bevorzugt von 3 000 bis 20 000 g/mol, auf. Geeignete Verfahren zur Herstellung einer entsprechenden Komponente (A) sowie auch Beispiele für die Komponente (A) selbst sind unter anderem in EP1093482B1 (Absätze [0014]-[0023], [0039]-[0055] sowie Beispiel 1 und Vergleichsbeispiel 1), korrespondierend zu US6884852B, oder EP1641854B1 (Absätze [0014]-[0035], Beispiele 4 und 6 sowie die Vergleichsbeispiele 1 und 2) beschrieben, korrespondierend zu US2007167598A, die zum Offenbarungsgehalt der vorliegenden Anmeldung zu zählen sind.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Bei den Polyoxyalkylenresten Y handelt es sich bevorzugt um lineare oder verzweigte Polyoxyalkylenreste, besonders bevorzugt um Polyoxypropylenreste, deren Kettenenden vorzugsweise über -O-C(=O)-NH- oder -O- an die Gruppe bzw. Gruppen -[(CR¹₂)_{b}-SiRₐ(OR²)₃₋ₐ] gebunden sind, wobei die Reste und Indizes eine der oben genannten Bedeutungen haben. Vorzugsweise sind dabei mindestens 85%, besonders bevorzugt mindestens 90%, insbesondere mindestens 95%, aller Kettenenden über -O-C(=O)-NH- an die Gruppe -[(CR¹₂)_{b}-SiRₐ(OR²)₃₋ₐ] gebunden. Die Polyoxyalkylenreste Y weisen vorzugsweise mittlere Molmassen Mₙ von 400 bis 30 000 g/mol, bevorzugt von 3 000 bis 20 000 g/mol, auf. Geeignete Verfahren zur Herstellung einer entsprechenden Komponente (A) sowie auch Beispiele für die Komponente (A) selbst sind unter anderem in EP1535940B1 (Absätze [0005]-[0025] sowie Beispiele 1-3 und Vergleichsbeispiel 1-4), korrespondierend zu US2005119436A, oder EP1896523B1 (Absätze [0008]-[0047]) beschrieben, korrespondierend zu US2010016537A, die zum Offenbarungsgehalt der vorliegenden Anmeldung zu zählen sind.

In einer besonderen Ausführungsform der Erfindung handelt es sich bei den Verbindungen (A) ganz oder teilweise um Polyurethane oder Polypropylenglycole, die nur über eine reaktive Silylgruppe der Formel -[(CR¹₂)_{b}-SiRₐ(OR²)₃₋ₐ] verfügen, wobei die Reste und Indizes die oben genannten Bedeutungen haben. D.h. es handelt sich um Verbindungen (A) der Formel (I) mit x gleich 1. In diesem Fall sind die übrigen Kettenenden vorzugsweise mit Hydroxylgruppen, Arylgruppen mit 6 bis 20 Kohlenstoffatomen oder Alkylgruppen mit 1 bis 20 Kohlenstoffatomen terminiert, wobei letztere besonders bevorzugt werden.

Besonders bevorzugt handelt es sich bei dieser besonderen Ausführungsform der Erfindung bei den Verbindungen (A) ganz oder teilweise um lineare Polyurethane oder Polypropylenglycole mit einem Kettenende, das mit einer verzweigten, unverzweigten oder cyclischen Alkylgruppe mit 1 bis 20 Kohlenstoffatomen terminiert ist, und einem zweiten Kettenende, das über eine reaktive Silylgruppe der Formel -[(CR¹₂)_{b}-SiRₐ(OR²)₃₋ₐ] verfügt.

Bei den Endgruppen der erfindungsgemäß eingesetzten Verbindungen (A) handelt es sich vorzugsweise um solche der allgemeinen Formeln

-NH-C(=O)-NR'-(CR¹₂)_{b}-SiRₐ(OR²)₃₋ₐ (II),

-O-C(=O)-NH-(CR¹₂)_{b}-SiRₐ(OR²)₃₋ₐ (III)

oder

-O-(CR¹₂)_{b}-SiRₐ(OR²)₃₋ₐ (IV),

wobei die Reste und Indizes eine der oben dafür angegebenen Bedeutungen haben.

Sofern es sich bei den Verbindungen (A) um Polyurethane handelt, was bevorzugt ist, weisen diese vorzugsweise eine oder mehrere der folgenden Endgruppen

-NH-C(=O)-NR'-(CH₂)₃-Si(OCH₃)₃,

-NH-C(=O)-NR'-(CH₂)₃-Si(OC₂H₅)₃,

-O-C(=O)-NH-(CH₂)₃-Si(OCH₃)₃ oder

-O-C(=O)-NH-(CH₂)₃-Si(OC₂H₅)₃ auf,

wobei R' die oben genannte Bedeutung hat.

Sofern es sich bei den Verbindungen (A) um Polypropylenglycole handelt, was besonders bevorzugt ist, weisen diese vorzugsweise eine oder mehrere der folgenden Endgruppen

-O-(CH₂)₃-Si(CH₃)(OCH₃)₂,

-O-(CH₂)₃-Si(OCH₃)₃,

-O-C(=O)-NH-(CH₂)₃-Si(OC₂H₅)₃,

-O-C(=O)-NH-CH₂-Si(CH₃)(OC₂H₅)₂,

-O-C(=O)-NH-CH₂-Si(OCH₃)₃,

-O-C(=O)-NH-CH₂-Si(CH₃)(OCH₃)₂ oder

-O-C(=O)-NH-(CH₂)₃-Si(OCH₃)₃ auf,

wobei die beiden letztgenannten Endgruppen besonders bevorzugt werden.

Die mittleren Molekulargewichte Mₙ der Verbindungen (A) betragen vorzugsweise mindestens 200 g/mol, besonders bevorzugt mindestens 1 000 g/mol, insbesondere mindestens 3 000 g/mol, und vorzugsweise höchstens 30 000 g/mol, besonders bevorzugt höchstens 20 000 g/mol, insbesondere höchstens 13 000 g/mol.

Sofern es sich bei den Resten Y um Polyurethane oder Polyether handelt, was bevorzugt ist, ergeben sich die mittleren Molekulargewichte Mₙ der Verbindungen (A) vorzugsweise durch Addition der oben genannten bevorzugten Molmassen der Reste Y und den Massen für die jeweiligen Binde- und/oder Endgruppen.

Die Viskosität der Verbindungen (A) beträgt vorzugsweise mindestens 0,1 Pas, besonders bevorzugt mindestens 0,5 Pas und insbesondere bevorzugt mindestens 1 Pas, und vorzugsweise höchstens 100 Pas, besonders bevorzugt höchstens 10 Pas und insbesondere bevorzugt höchstens 5 Pas, jeweils gemessen bei 20°C.

Die Viskosität der erfindungsgemäß eingesetzten Polymere (A) wird im Rahmen der vorliegenden Erfindung nach einer Temperierung auf 20°C mit einem DV 3 P-Rotationsviskosimeter von Fa. A. Paar (Brookfieldsystme), unter Verwendung von Spindel 5 bei 2,5 UPM entsprechend der ISO 2555 bestimmt.

Die erfindungsgemäß eingesetzten Verbindungen (A) sind handelsübliche Produkte oder können nach in der Chemie gängigen Verfahren hergestellt werden.

Die Herstellung der Polymere (A) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen und Verbindungen, die isocyanatreaktive Gruppen aufweisen.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95% und besonders bevorzugt mehr als 98%, aller an den Rest Y gebundenen Silylgruppen identisch sind. Es kann dann aber auch eine Komponente (A) eingesetzt werden, die zumindest zum Teil Verbindungen der Formel (I) enthält, bei denen an einen Rest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste Y gebundene Silylgruppen vorhanden sind, wobei jedoch sämtliche an jeweils einen Rest Y gebundenen Silylgruppen identisch sind.

### Füllstoff (B)

Vorzugsweise bestehen mindestens 30 Gew.-%, besonders bevorzugt mindestens 40 Gew.% und insbesondere bevorzugt mindestens 60 Gew.-% aller Füllstoffe (B) aus metallischen Siliziumpartikeln (B1).

Sofern die Füllstoffe (B) nicht ausschließlich aus metallischen Siliziumpartikeln (B1) bestehen, enthalten sie vorzugsweise weitere thermisch leitfähige Füllstoffe (B2), die aus Materialien bestehen, die eine Wärmeleitfähigkeit von mindestens 5 W/mK aufweisen. Insgesamt bestehen die Füllstoffe (B) vorzugsweise zu mindestens 60 Gew.-%, besonders bevorzugt zu mindestens 70 Gew.-% und insbesondere bevorzugt zu mindestens 80 Gew.-% aus Füllstoffen (B1) und, falls vorhanden, (B2). In einer speziell bevorzugten Ausführungsform der Erfindung bestehen die Füllstoffe (B) ausschließlich aus Füllstoffen (B1) und, falls vorhanden, (B2).

Der mittlere Durchmesser x50 der erfindungsgemäßen metallischen Siliziumpartikel (B1) liegt im Bereich 0,5 - 250 µm, vorzugsweise im Bereich 10 - 200 µm, bevorzugt im Bereich 20 - 180 µm, besonders bevorzugt im Bereich 30 - 160 µm, insbesondere bevorzugt im Bereich 35 - 150 µm.

Insbesondere bevorzugt weisen die Siliziumpartikel (B1) mit dem oben genannten bevorzugten bzw. besonders bevorzugten mittleren Durchmessern x50 zusätzlich ein Breite/Länge-Verhältnis (Aspekt-Verhältnis b/l) von mindestens 0,76 auf.

Vorzugsweise werden die Siliziumpartikel (B1) aus einem geschmolzenen Zustand erzeugt.

Besonders bevorzugt werden die Siliziumpartikel (B1) dabei aus einer Siliziumschmelze durch Sprühen oder Zerstäuben (auch als Atomisieren bezeichnet) und anschließendem Abkühlen in ihre feste Partikelform gebracht.

Die erfindungsgemäßen thermoleitfähigen Massen (M) enthalten vorzugsweise mindestens 27 Gew.-% metallischer Siliziumpartikel (B1), bevorzugt mindestens 36 Gew.-% und insbesondere bevorzugt mindestens 54 Gew.-%. Enthält die Massen (M) zu geringe Mengen metallischer Siliziumpartikel (B1), so können die gewünschten vorteilhaften Effekte dieser Komponente, beispielsweise der niedrigen Dichte und der hohen thermischen Leitfähigkeit, nicht mehr in dem gewünschten Ausmaß erreicht werden.

Die erfindungsgemäßen metallischen Siliziumpartikel (B1) können jede beliebige regelmäßige oder unregelmäßige Form haben. Beispielswiese können die Partikel eine sphärische, rundliche, ellipsoide, zylindrische, faserige, eckige, kantige, kartoffelförmige, nodulare oder spratzige Form haben. Bevorzugt sind erfindungsgemäße metallischen Siliziumpartikel (B1), die eine überwiegend ellipsoide, kartoffelförmige, rundliche oder sphärische Form aufweisen. Vorzugsweise weisen die Siliziumpartikel (B1) ein Breite/Länge-Verhältnis (Aspekt-Verhältnis b/l) von mindestens 0,76, besonders bevorzugt von mindestens 0,77 und insbesondere besonders bevorzugt von mindestens 0,78 auf. Noch stärker werden Siliziumpartikel (B1) mit einem Breite/Länge-Verhältnis von mindestens 0,79 bevorzugt.

Die Verteilungsbreite der Partikelgröße (SPAN) ist definiert als SPAN = (x90-x10)/x50, wobei x90, x50 und x10 die Perzentilwerte bei 90%, 50% und 10% darstellen. Die Verteilungsbreite der erfindungsgemäßen metallischen Siliziumpartikel (B1) ist grundsätzlich nicht eingeschränkt. Bevorzugt weisen die erfindungsgemäßen metallischen Siliziumpartikel (B1) einen SPAN von größer 0,28, bevorzugt größer 0,30, besonders bevorzugt größer 0,35 auf. In einer bevorzugten Ausführungsform liegt der SPAN zwischen 0,40 und 2,5, bevorzugt zwischen 0,41 und 2,2 und insbesondere bevorzugt zwischen 0,5 und 2,0.

Dabei ist es unerheblich, ob eine einzelne Fraktion von Siliziumpartikel (B1) verwendet wird, deren SPAN im erfindungsgemäßen Bereich liegt, oder ob zwei oder mehrere Fraktionen von Siliziumpartikeln gemischt werden und dadurch die erfinderische Partikelgrößenverteilungsbreite der erfinderischen Siliziumpartikel (B1) erreicht wird. Werden zwei oder mehrere Fraktionen von Siliziumpartikeln gemischt, so kann dies vor dem Vermischen mit einer oder mehreren Komponenten der erfindungsgemäßen Zusammensetzung erfolgen, oder die Fraktionen von Siliziumpartikeln können auch getrennt voneinander mit einer oder mehreren Komponenten der erfindungsgemäßen Zusammensetzung gemischt werden. Die Reihenfolge der Zugabe ist dabei egal.

Vorzugsweise werden maximal vier Fraktionen von Siliziumpartikeln (B1) gemischt, bevorzugt werden maximal drei Fraktionen von Siliziumpartikeln (B1) gemischt, besonders bevorzugt werden maximal zwei Fraktionen von erfindungsgemäßen Siliziumpartikeln (B1) eingesetzt, insbesondere bevorzugt wird nur ein einzelnes, erfindungsgemäßes Siliziumpulver (B1) eingesetzt.

Nachteilig an Siliziumpartikeln mit einer mittleren Partikelgröße von über 250 µm ist, dass solch großkörnige Siliziumpartikel häufig nicht in die feinen Spalte zwischen Bauteilen passen, die beispielsweise mit Gap Filler auszufüllen sind. Nachteilig an sehr feinen Siliziumpartikeln oder gemahlenen Siliziumpartikeln ist, dass solche Partikel eine vergleichsweise große Oberfläche haben und viel Polymer binden. Dadurch erhöht sich die Viskosität der Zusammensetzung stark, so dass nur Mischungen mit vergleichsweise niedrigen Füllgraden und daraus folgend niedrigerer Wärmeleitfähigkeit erzeugt werden können. Bei höheren Füllgraden mit zu feinen Siliziumpartikeln würde die Zusammensetzung sehr steif werden und kann mit klassischen Verfahren, wie z.B. Dispenser, nicht mehr verarbeitet werden.

Ferner sind metallische Siliziumpartikel unter bestimmten Bedingungen brennbar und die Stäube explosionsgefährlich. Die Gefahr der Staubbildung, die Brennbarkeit und Explosionsgefährlichkeit von Metallpulvern nimmt dabei mit abnehmender Partikelgröße stark zu. Feine metallische Siliziumpartikel sind aufgrund der niedrigen Mindestzündenergie gefährlicher in der Handhabung und erfordern aufwändige und kostenintensive Sicherheitsvorkehrungen in der betrieblichen Verarbeitung.

In einer bevorzugten Ausführungsform enthalten die erfinderischen Siliziumpartikel (B1) höchstens 1,5 Gew.-% Siliziumpartikel mit einem maximalen Durchmesser von 2 µm, bevorzugt höchstens 1 Gew.-%, besonders bevorzugt höchstens 0,5 Gew.-%, jeweils bezogen auf die Gesamtmenge an Siliziumpartikel (B1). Insbesondere bevorzugte Siliziumpartikel (B1) sind im Wesentlichen frei von Partikelfraktionen kleiner 2 µm. "Im Wesentlichen frei von" bedeutet, dass die Anwesenheit solcher Partikel im Umfang einer "Verunreinigung" der erfindungsgemäßen Partikel (B1) toleriert wird und deren erfindungsgemäße Wirkung nicht stört.

Der Begriff "maximaler Durchmesser" beschreibt den längsten möglichen Abstand, den zwei Partikeloberflächen innerhalb eines Partikels zueinander haben.

Die erfindungsgemäßen Siliziumpartikel (B1) enthalten verzugsweise weniger als 20 Gew.-%, bevorzugt weniger als 15 Gew.-%, besonders bevorzugt weniger als 10 Gew.-% einer Partikelfraktion mit einem Durchmesser von kleiner oder gleich 20 µm jeweils bezogen auf die Gesamtmenge an Siliziumpartikeln.

Metallisches Silizium weist mehrere sehr vorteilhafte Eigenschaften für die Verwendung als thermoleitfähiger Füllstoff (B1) auf. Beispielsweise verbessert die außergewöhnlich hohe Wärmeleitfähigkeit von Siliziumpartikeln (B1) die Wärmeleitfähigkeit der daraus hergestellten thermoleitfähigen Massen (M). Die niedrige Dichte der Siliziumpartikel (B1) reduziert das Gewicht der Zusammensetzung und der daraus hergestellten Bauteile und hilft Kosten zu sparen. Die niedrige elektrische Leitfähigkeit ermöglicht die Herstellung elektrisch isolierender Bauteile und verbessert die elektrische Durchschlagsfestigkeit. Die niedrige Mohshärte der Siliziumpartikel (B1) reduziert die Abrasion bei der Verarbeitung. Da die genannten Vorteile mit abnehmender Reinheit des Siliziums ganz oder teilweise verloren gehen, beträgt die Reinheit der erfindungsgemäßen Siliziumpartikel (B1) und damit der Gehalt an Silizium mindestens 80 Gew.-%, bevorzugt mindestens 90 Gew.-%, besonders bevorzugt mindestens 95 Gew.-%.

Der Stand der Technik kennt verschiedene Methoden zur Erzeugung feinteiliger Metallpartikel mit spratziger, nodularer, ellipsoider, kartoffelförmiger, rundlicher oder sphärischer Form. Die erfindungsgemäßen Siliziumpartikel (B1) werden im letzten Herstellschritt vorzugsweise aus einem geschmolzenen Zustand erzeugt, wodurch sie eine glatte Oberfläche und abgerundete Oberflächenformen aufweisen und im Wesentlichen frei von Bruchstellen, scharfen Kanten und spitzen Ecken sind. Dadurch unterscheiden sie sich von herkömmlichen gemahlenen Partikeln, die beispielsweise mittels Brechen, Schleifen oder Mahlen in die finale Form gebracht wurden. Dabei ist es unerheblich, ob die Partikel in einem ersten Verfahrensschritt kalt zerkleinert werden, beispielsweise durch Mahlung, und anschließend durch Erhitzen über den Schmelzpunkt in eine schmelzflüssige Form gebracht werden, beispielsweise durch Hitzebehandlung in einer heißen Zone, beispielsweise mittels eines Plasmas, oder ob zunächst eine Siliziumschmelze erzeugt und anschließend zerkleinert wird, beispielsweise durch Zerstäuben. Vorzugsweise werden die erfindungsgemäßen Siliziumpartikel durch Sprühen oder Zerstäuben, auch Atomisieren genannt, einer Siliziumschmelze und anschließendes Abkühlen in ihre erfindungsgemäße feste Partikelform gebracht.

Geeignete Verfahren zur Erzeugung der erfindungsgemäßen Siliziumpartikel (B1) sind dem Fachmann bekannt und werden beispielsweise beschrieben in Kapitel 2.2 in "Pulvermetallurgie: Technologien und Werkstoffe, Schatt, Werner, Wieters, Klaus-Peter, Kieback, Bernd, S. 5-48, ISBN 978-3-540-681112-0, E-Book: https://doi.org/10.1007/978-3-540-68112-0_2". Bevorzugte Verfahren zur Erzeugung der erfindungsgemäßen Siliziumpartikel (B1) sind die Inertgasverdüsung, auch Gasatomisierung genannt, Druckwasserverdüsung, auch Flüssigatomisierung oder Wasserzerstäubungsverfahren genannt, oder Schmelzschleuderverfahren, auch Zentrifugalatomisierung oder Rotationszerstäubung genannt. Die beschriebenen Verfahren erlauben die Herstellung von metallischen Siliziumpartikeln in einem sehr unterschiedlichen Partikelgrößenbereich, insbesondere im Bereich der mittleren Partikelgröße von wenigen Micrometern bis zu wenigen Millimetern. Außerdem können die metallischen Siliziumpartikel in sehr unterschiedlicher Kornform und mit sehr variabler Breite der Partikelgrößenverteilung erzeugt werden, beispielsweise "spratzig", das heißt sehr unregelmäßig, nodular, ellipsoid, kartoffelförmig, rundlich oder sphärisch.

Vorzugsweise ist das Herstellverfahren der erfindungsgemäßen metallischen Siliziumpartikel (B1) so auszuführen, dass die Partikel in der bevorzugten überwiegend nodularen, spratzigen, ellipsoiden, kartoffelförmigen, rundlichen oder sphärischen Form anfallen und im Wesentlichen frei sind von kantigen oder spitzen Partikeln.

Besonders bevorzugt ist das Herstellverfahren der erfindungsgemäßen metallischen Siliziumpartikel (B1) so auszuführen, dass die Partikel in ihrer bevorzugten überwiegend ellipsoiden, kartoffelförmigen, rundlichen oder sphärischen Form anfallen, dadurch gekennzeichnet, dass das Breite/Länge-Verhältnis (Aspekt-Verhältnis b/l) vorzugsweise mindestens 0,76, bevorzugt mindestens 0,77, besonders bevorzugt mindestens 0,78, insbesondere mindestens 0,79 beträgt, und im Wesentlichen frei sind von spratzigen, nodularen, kantigen oder spitzen Partikeln. Die erstarrten Partikel können in einem anschließenden Verfahrensschritt gemäß gängiger Verfahren nach Größe getrennt werden, z.B. mittels Klassieren durch Sieben oder mittels Sichten. Bei diesen Verfahren können Agglomerate und verklebte Partikel abgetrennt werden, es werden jedoch im Wesentlichen keine Partikel zerstört. "Überwiegend rundlich" bzw. "im Wesentlichen frei von" bedeutet, dass die Anwesenheit solcher Partikel im Umfang einer "Verunreinigung" von maximal 10 Gew.-%, bevorzugt maximal Gew.-5% der erfindungsgemäßen Partikel (B1) toleriert wird und deren erfindungsgemäße Wirkung nicht stört.

Die erfindungsgemäßen Massen (M) können als Füllstoffe (B) neben den metallischen Siliziumpartikeln (B1) weitere thermisch leitfähige Füllstoffe (B2), die aus Materialien mit einer Wärmeleitfähigkeit von mindestens 5 W/mK bestehen, wie auch beliebig weitere Füllstoffe (B3) enthalten. Als Füllstoffe (B) gelten dabei alle anorganischen, bei Temperaturen unter 200 °C festen, kristallinen oder amorphen Materialien.

Vorzugsweise werden als weitere Füllstoffe neben den metallischen Siliziumpartikeln (B1) thermisch leitfähige Füllstoffe (B2) eingesetzt. Beispiele für wärmeleitfähige Füllstoffe (B2) sind Magnesiumoxid, metallisches Aluminiumpulver, metallisches Silberpulver, Zinkoxid, Bornitrid, Siliziumcarbid, Aluminiumnitrid, Aluminiumhydroxid, Aluminiumoxid, Graphit, usw. Bevorzugte wärmeleitfähige Füllstoffe (B2) sind Aluminiumpulver, Magnesiumoxid, Aluminiumhydroxid, Zinkoxid und Aluminiumoxid. Besonders bevorzugte wärmeleitfähige Füllstoffe (B2) sind Aluminiumhydroxid, Aluminiumoxid und Zinkoxid.

Beispiele für beliebig weitere Füllstoffe (B3) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Bariumsulfat, Calciumcarbonat, Gips oder Glaspulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß mit großer BET-Oberfläche oder Graphit; hohlkugelförmige Füllstoffe, wie keramische Mikrokugeln, Glaskugeln oder faserförmige Füllstoffe. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Die Form der weiteren Füllstoffe (B2) und/oder (B3) ist grundsätzlich nicht eingeschränkt. Die Partikel können beispielsweise sphärisch, ellipsoid, nadelförmig, röhrenförmig, plättchenförmig, faserförmig, spratzig, nodular oder unregelmäßig geformt sein. Bevorzugt sind sie überwiegend rundlich, sphärisch, ellipsoid, kartoffelförmig oder unregelmäßig geformt. Der mittlere Durchmesser der weiteren Füllstoffe (B2) und/oder (B3) liegt vorzugsweise im Bereich von 0,01 - 250 µm, bevorzugt im Bereich von 0,1 - 200 µm, besonders bevorzugt im Bereich von 0,2 - 180 µm, insbesondere im Bereich von 0,4 - 150 µm.

Füllstoffe (B) mit sehr hoher Dichte sind nachteilig in der Anwendung, wie zum Beispiel in Flugzeugen und Elektrofahrzeugen, da sie das Gewicht der Bauteile sehr stark erhöhen. Daher werden als weitere Füllstoffe (B2) und/oder (B3) Materialien bevorzugt, die eine Dichte von höchstens 5,0 g/cm³, bevorzugt höchstens 4,0 g/cm³, besonders bevorzugt höchstens 3,0 g/cm³ aufweisen.

Vorzugsweise enthalten die erfindungsgemäßen Massen (M) höchstens 24 Gew.-%, bevorzugt höchstens 10 Gew.-%, besonders bevorzugt überhaupt keine Füllstoffe (B2) und/oder (B3) mit einer Dichte von größer 5,0 g/cm³.

In vielen Anwendungen ist eine elektrische Leitfähigkeit der wärmeleitfähigen Zusammensetzung nicht gewünscht, da diese beispielsweise zu Kurzschlüssen führen kann. Vorzugsweise enthält die erfindungsgemäße Masse (M) ausschließlich Füllstoffe (B), deren spezifischer Widerstand mindestens 1 Ω•mm²/m beträgt.

Die Gesamtmenge an Füllstoffen (B) in den erfindungsgemäßen wärmeleitfähigen Massen (M) beträgt 100 - 1900 Gewichtsteile (B) auf 100 Gewichtsteile (A), vorzugsweise 150 - 1850 Gewichtsteile (B) auf 100 Gewichtsteile (A) und besonders bevorzugt 200 - 1800 Gewichtsteile (B) auf 100 Gewichtsteile (A).

Vorzugsweise handelt es sich bei mindestens 90 Gew.-%, besonders bevorzugt bei mindestens 95 Gew.-% und insbesondere bevorzugt bei mindestens 98% aller in den erfindungsgemäßen Massen (M) verwendeten Füllstoffe (B) um thermisch leitfähige Füllstoffe (B1) und gegebenenfalls (B2). In einer besonders vorteilhaften Ausführungsform der Erfindung enthalten die erfindungsgemäßen Massen (M) ausschließlich thermisch leitfähige Füllstoffe (B1) und gegebenenfalls (B2).

Zusätzlich zu den eingesetzten Komponenten (A) und (B) können die erfindungsgemäß hergestellten Massen (M) alle weiteren Stoffe enthalten, die auch bisher in vernetzbaren Massen eingesetzt wurden und die unterschiedlich sind zu Komponenten (A) und (B), wie z.B. solche ausgewählt aus der Gruppe von Stickstoff aufweisenden Organosiliciumverbindungen (C), nicht reaktiven Weichmachern (D), Siliconharzen (E), Katalysatoren (F), Haftvermittlern (G), Wasserfängern (H), Additiven (I) und Zuschlagstoffen (J).

### Komponente (C)

Bevorzugt handelt es sich bei der gegebenenfalls eingesetzten Komponente (C) um Organosiliciumverbindungen enthaltend Einheiten der Formel

DₑSi(OR⁴)_{d}R³_{c}O_{(4-c-d-e)/2} (V),

worin
R³ gleich oder verschieden sein kann und einen einwertigen, gegebenenfalls substituierten SiC-gebundenen, von Stickstoff freien organischen Rest bedeutet,
R⁴ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit mindestens einem nicht an eine Carbonylgruppe (C=O) gebundenen Stickstoffatom bedeutet,
c 0, 1, 2 oder 3, bevorzugt 0 oder 1, ist,
d 0, 1, 2 oder 3, bevorzugt 1, 2 oder 3, besonders bevorzugt 2 oder 3, ist und
e 0, 1, 2, 3 oder 4, bevorzugt 1, ist,
mit der Maßgabe, dass die Summe aus c+d+e kleiner oder gleich 4 ist und pro Molekül mindestens ein Rest D anwesend ist.

Bei den erfindungsgemäß gegebenenfalls eingesetzten Organosiliciumverbindungen (C) kann es sich sowohl um Silane handeln, d.h. Verbindungen der Formel (V) mit c+d+e=4, als auch um Siloxane, d.h. Verbindungen enthaltend Einheiten der Formel (V) mit c+d+e≤3, wobei es sich bevorzugt um Silane handelt.

Beispiele für Rest R³ sind die für R angegebenen Beispiele.

Bei Rest R³ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für gegebenenfalls substituierte Kohlenwasserstoffreste R⁴ sind die für Rest R angegebenen Beispiele.

Bei den Resten R⁴ handelt es sich vorzugsweise um Wasserstoffatom oder gegebenenfalls mit Halogenatomen substituierte Kohlenwasserstoffreste mit 1 bis 18 Kohlenstoffatomen, besonders bevorzugt um Wasserstoffatom oder Kohlenwasserstoffreste mit 1 bis 10 Kohlenstoffatomen, insbesondere um Methyl- oder Ethylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH3)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂N(CH₂)₃-, (C₄H₉)₂N(CH₂)₃-, (C₅H₁₁)₂N(CH₂)₃-, (C₆H₁₃)₂N(CH₂)₃-, (C₇H₁₅)₂N(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂N(CH₂)-, (C₄H₉)₂N(CH₂)-, (C₅H₁₁)₂N(CH₂)-, (C₆H₁₃)₂N(CH₂)-, (C₇H₁₅)₂N(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- oder cyclo-C₆H₁₁NH(CH₂)₃-Rest.

Beispiele für die erfindungsgemäß gegebenenfalls eingesetzten Silane der Formel (V) sind H₂N(CH₂)₃-Si(OCH₃)₃, H₂N(CH₂)₃-Si(OC₂H₅)₃, H₂N(CH₂)₃-Si(OCH₃)₂CH_{3,} H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₃)₃, cyclo-C₆H₁₁NH(CH₂)₃-Si(OCH₃)₃, cyclo-C₆H₁₁NH(CH₂)₃-Si(OC₂H₃)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH2)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH (CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß gegebenenfalls eingesetzten Organosiliciumverbindungen (C) können in den erfindungsgemäßen Massen (M) auch die Funktion eines Härtungskatalysators oder -cokatalysators übernehmen.

Des Weiteren können die erfindungsgemäß gegebenenfalls eingesetzten Organosiliciumverbindungen (C) als Haftvermittler und/oder als Wasserfänger wirken.

Die erfindungsgemäß gegebenenfalls eingesetzten Organosiliciumverbindungen (C) sind handelsübliche Produkte bzw. nach in der Chemie gängigen Verfahren herstellbar.

Falls die erfindungsgemäßen Massen (M) Komponente (C) enthalten, handelt es sich um Mengen von bevorzugt 0,1 bis 25 Gewichtsteilen, besonders bevorzugt 0,2 bis 20 Gewichtsteilen, insbesondere 0,5 bis 15 Gewichtsteilen, jeweils bezogen auf 100 Gewichtsteile der Komponente (A). Die erfindungsgemäßen Massen (M) enthalten bevorzugt Komponente (C).

### Komponente (D)

Als gegebenenfalls eingesetzte nicht reaktive Weichmacher (D) können alle nicht reaktiven Weichmacher eingesetzt werden, die auch bisher in vernetzbaren Organopolysiloxanmassen eingesetzt worden sind.

Bevorzugt handelt es sich bei den nicht reaktiven Weichmachern (D) um organische Verbindungen ausgewählt aus den Stoffgruppen bestehend aus
- vollständig veresterten aromatischen oder aliphatischen Carbonsäuren,
- vollständig veresterten Derivaten der Phosphorsäure,
- vollständig veresterten Derivaten Sulfonsäuren,
- verzweigten oder unverzweigten gesättigten Kohlenwasserstoffen,
- Polystyrolen,
- Polybutadienen,
- Polyisobutylenen,
- Polyestern oder
- Polyethern.

Bei den erfindungsgemäß gegebenenfalls eingesetzten nicht reaktiven Weichmachern (D) handelt es sich bevorzugt um solche, die bei Temperaturen <80°C weder mit Wasser noch mit den Komponenten (A) und (B) reagieren, bei 20°C und 1013 hPa flüssig sind und einen Siedepunkt >250°C bei 1013 hPa aufweisen.

Beispiele für Carbonsäureester (D) sind Phthalsäureester, wie z.B. Dioctylphthalat, Diisooctylphthalat, Diisononylphthalat, Diisodecylphthalat und Diundecylphthalat; perhydrierte Phthalsäureester, wie z.B. 1,2-Cyclohexandicarbonsäurediisononylester und 1,2-Cyclohexandicarbonsäuredioctylester; Adipinsäureester, wie z.B. Dioctyladipat; Benzoesäureester; Ester der Trimellitsäure, Glycolester; Ester gesättigter Alkandiole, wie z.B. 2,2,4-Trimethyl-1,3-pentandiolmonoisobutyrate und 2,2,4-Trimethyl-1,3-pentandioldiisobutyrate.

Beispiele für Polyether (D) sind Polyethylenglycole, Poly-THF und Polypropylenglycole mit mittleren Molmassen Mₙ von vorzugsweise 200 bis 20 000 g/mol.

Bevorzugt handelt es sich bei Weichmachern (D) um solche mit Molmassen, bzw. im Falle polymerer Weichmacher mittlerer Molmassen Mₙ, von mindestens 200 g/mol, besonders bevorzugt von größer 500 g/mol, insbesondere von größer 900 g/mol, eingesetzt. Vorzugsweise besitzen sie Molmassen bzw. mittlere Molmassen Mₙ von maximal 20000 g/mol, besonders bevorzugt von maximal 10 000 g/mol, insbesondere höchstens 8 000 g/mol.

Falls erfindungsgemäß nicht reaktive Weichmacher (D) eingesetzt werden, handelt es sich um Mengen von vorzugsweise 5 bis 300 Gewichtsteilen, besonders bevorzugt 10 bis 200 Gewichtsteilen, insbesondere 20 bis 150 Gewichtsteilen, jeweils bezogen auf 100 Gewichtsteile der Komponente (A). In den erfindungsgemäßen Massen (M) werden bevorzugt keine Weichmacher (D) eingesetzt.

### Komponente (E)

Besonders bevorzugt handelt es sich bei den erfindungsgemäß gegebenenfalls eingesetzten Siliconharzen (E) um solche, die zu mindestens 50 Gew.-%, vorzugsweise zu mindestens 70 Gew.-%, insbesondere zu mindestens 90 Gew.-%, aus T-Einheiten der Formeln PhSiO_{3/2}, PhSi(OR⁵)O_{2/2}, PhSi(OR⁵)₂O_{1/2}, MeSiO_{3/2}, MeSi(OR⁵)O_{2/2} und/oder MeSi(OR⁵)₂O_{1/2} bestehen, wobei Ph für Phenylrest, Me für den Methylrest und R⁵ für Wasserstoffatom oder gegebenenfalls mit Halogenatomen substituierte Alkylreste mit 1 bis 10 Kohlenstoffatomen, bevorzugt für unsubstituierte Alkylreste mit 1 bis 4 Kohlenstoffatomen, stehen, jeweils bezogen auf die Gesamtzahl an Einheiten. Dabei bestehen diese Harze vorzugsweise zu mindestens 30 Gew.-%, besonders bevorzugt zu mindestens 40 Gew.-%, aus den drei oben genannten Einheiten mit einer PhSi-Funktion.

Insbesondere bevorzugt handelt es sich bei den erfindungsgemäß gegebenenfalls eingesetzten Siliconharzen (E) um solche, die zu mindestens 50 Gew.-%, vorzugsweise zu mindestens 70 Gew.-%, insbesondere zu mindestens 90 Gew.-%, aus T-Einheiten der Formeln PhSiO_{3/2}, PhSi(OR⁵)O_{2/2} und/oder PhSi(OR⁵)₂O_{1/2}, bestehen, wobei alle Variablen die oben genannte Bedeutung aufweisen.

Vorzugsweise besitzen die erfindungsgemäß gegebenenfalls eingesetzten Siliconharze (E) eine mittlere Molmasse (Zahlenmittel) Mₙ von mindestens 400 g/mol und besonders bevorzugt von mindestens 600 g/mol. Die mittlere Molmasse Mₙ der Siliconharze (E) liegt vorzugsweise bei höchstens 400 000 g/mol, besonders bevorzugt bei höchstens 10 000 g/mol, insbesondere bei höchstens 3 000 g/mol.

Die erfindungsgemäß gegebenenfalls eingesetzten Siliconharze (E) können bei 23°C und 1000 hPa sowohl fest als auch flüssig sein, wobei Siliconharze (E) bevorzugt flüssig sind. Vorzugsweise besitzen die Siliconharze (E) eine Viskosität von 10 bis 100 000 mPas, vorzugsweise von 50 bis 50 000 mPas, insbesondere von 100 bis 20 000 mPas, jeweils bei 25°C.

Die Siliconharze (E) können sowohl in reiner Form als auch in Form einer Mischung in einem geeigneten Lösungsmittel eingesetzt werden, wobei ein Einsatz in reiner Form jedoch bevorzugt wird.

Beispiele für als Komponenten (E) einsetzbare Phenylsiliconharze sind handelsübliche Produkte, z.B. verschiedene SILRES^{®}-Typen der Fa. Wacker Chemie AG, wie SILRES^{®} IC 368, SILRES^{®} IC 678 oder SILRES^{®} IC 231 sowie SILRES^{®} SY231.

Falls für die erfindungsgemäßen Massen (M) Harze (E) eingesetzt werden, handelt es sich vorzugsweise um Mengen von mindestens 1 Gewichtsteil, besonders bevorzugt mindestens 5 Gewichtsteilen, insbesondere mindestens 10 Gewichtsteilen und vorzugsweise höchstens 1000 Gewichtsteilen, besonders bevorzugt höchstens 500 Gewichtsteilen, insbesondere höchstens 300 Gewichtsteilen, jeweils bezogen auf 100 Gewichtsteile der Komponente (A).

### Komponente (F)

Bei den in den erfindungsgemäßen Massen (M) gegebenenfalls eingesetzten Katalysatoren (F) kann es sich um beliebige, bisher bekannte Katalysatoren für durch Silankondensation härtende Massen handeln.

Beispiele für metallhaltige Härtungskatalysatoren (F) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (F) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, 1,1,2,2-Tetramethylguanidin, 1,1,2,3-Tetramethylguanidin, N,N-Bis-(N,N-dimethyl-2-aminoethyl)-methylamin, N,N-Dimethylcyclohexylamin, N,N-Dimethylphenylamin und N-Ethylmorpholin.

Ebenfalls als Katalysator (F) können saure Verbindungen eingesetzt werden, wie Phosphorsäure und ihre teilveresterten Derivate, Toluolsulfonsäure, Schwefelsäure, Salpetersäure oder auch organische Carbonsäuren, z.B. Essigsäure und Benzoesäure.

Falls erfindungsgemäß Katalysatoren (F) eingesetzt werden, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

In einer Ausführungsform der Erfindung handelt es sich bei den gegebenenfalls eingesetzten Katalysatoren (F) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90 Gew.-%, vorzugsweise zu mindestens 95 Gew.-%, aus Verbindungen der Formel (I) besteht, in denen b ungleich 1 ist.

In den erfindungsgemäßen Massen (M) kann vorzugsweise dann auf metallhaltige Katalysatoren (F), und insbesondere auf Zinn enthaltende Katalysatoren, verzichtet werden, wenn die Komponente (A) ganz oder zumindest teilweise, d.h. zu mindestens 10 Gew.- %, vorzugsweise zu mindestens 20 Gew.-%, aus Verbindungen der Formel (I) besteht, in denen b gleich 1 ist und R¹ die Bedeutung von Wasserstoffatom hat.

### Komponente (G)

Bei den erfindungsgemäß gegebenenfalls eingesetzten Haftvermittlern (G) kann es sich um beliebige, bisher für durch Silankondensation härtende Systeme beschriebene Haftvermittler handeln.

Beispiele für Haftvermittler (G) sind Epoxysilane, wie Glycidoxypropyltrimethoxysilane, Glycidoxypropyl-methyldimethoxysilan, Glycidoxypropyltriethoxysilan oder Glycidoxypropyl-metyhldiethoxysilan, 2-(3-Triethoxysilylproypl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyl-dimethoxysilymethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls die erfindungsgemäßen Massen (M) Haftvermittler (G) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse (M).

### Komponente (H)

Bei den erfindungsgemäß gegebenenfalls eingesetzten Wasserfängern (H) kann es sich um beliebige, für durch Silankondensation härtende Systeme beschriebene Wasserfänger handeln.

Beispiele für Wasserfänger (H) sind Silane wie Vinyltrimethoxysilan, Vinyltriethoxysilan, Vinylmethyldimethoxysilan, Phenyltrimethoxysilan, Phenyltriethoxysilan, Phenylmethyldimethoxysilan, Tetraethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan, wobei Vinyltrimethoxysilan bevorzugt ist.

Falls die erfindungsgemäßen Massen (M) Wasserfänger (H) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse (M). Die erfindungsgemäßen Massen enthalten bevorzugt Wasserfänger (H), besonders bevorzugt Vinyltrimethoxysilan und/oder Phenyltrimethoxysilan.

### Komponente (I)

Bei den erfindungsgemäß gegebenenfalls eingesetzten Additiven (I) kann es sich um beliebige, bisher bekannte für silanvernetzende Systeme typische Additive handeln.

Bei den erfindungsgemäß gegebenenfalls eingesetzten Additiven (I) handelt es sich um von den bisher genannten Komponenten abweichende Verbindungen, bevorzugt um Antioxidantien, UV-Stabilisatoren, wie z.B. sog. HALS-Verbindungen, Fungizide, handelsübliche Entschäumer, z.B. der Firma BYK (D-Wesel), handelsübliche Netzmittel, z.B. der Firma BYK (D-Wesel), oder Pigmente.

Falls zur erfindungsgemäßen Herstellung der Massen (M) Additive (I) eingesetzt werden, was eine bevorzugte Ausführungsform darstellt, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Bestandteil (A).

### Komponente (J)

Bei den erfindungsgemäß gegebenenfalls eingesetzten Zuschlagsstoffen (J) handelt es sich bevorzugt um Tetraalkoxysilane, z.B. Tetraethoxysilan, und/oder deren Teilkondensate, Reaktivweichmacher, Rheologieadditive, Flammschutzmittel oder organische Lösungsmittel.

Bevorzugte Reaktivweichmacher (J) sind Verbindungen, die Alkylketten mit 6 bis 40 Kohlenstoffatome enthalten und eine gegenüber den Verbindungen (A) reaktive Gruppe besitzen. Beispiele sind Isooctyltrimethoxysilan, Isooctyltriethoxysilan, N-Octyltrimethoxysilan, N-Octyltriethoxysilan, Decyltrimethoxysilan, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Als Flammschutzmittel (J) können alle Flammschutzmittel eingesetzt werden, wie sie für Kleb- und Dichtstoffsysteme typisch sind, bevorzugt halogenierte Verbindungen und (Teil-)Ester der Phosphorsäure sowie deren Derivate, insbesondere (Teil-)Ester, der Phosphorsäure.

Beispiele für organische Lösungsmittel (J) sind niedermolekulare Ether, Ester, Ketone, aromatische und aliphatische sowie gegebenenfalls halogenhaltige Kohlenwasserstoffe und Alkohole, wobei letztere bevorzugt werden.

Den erfindungsgemäßen Massen (M) werden vorzugsweise keine organischen Lösungsmittel (J) zugesetzt.

Falls zur erfindungsgemäßen Herstellung der Massen (M) eine oder mehrere Komponenten (J) eingesetzt werden, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Bei einer bevorzugten Ausführungsform enthalten die erfindungsgemäßen Massen (M)
(A) 100 Gewichtsteile Verbindungen der Formel (I),
(B1) 100-1900 Gewichtsteile Füllstoffe (B1)
(B2) 0-1000 Gewichtsteile Füllstoffe (B2)
(B3) 0-500 Gewichtsteile Füllstoffe (B3)
(C) 0,1-50 Gewichtsteile Organosiliciumverbindungen enthaltend Einheiten der Formel (V),
gegebenenfalls (D) nicht reaktive Weichmacher,
gegebenenfalls (E) Siliconharze
gegebenenfalls (F) Katalysatoren,
gegebenenfalls (G) Haftvermittler,
gegebenenfalls (H) Wasserfänger,
gegebenenfalls (I) Additive und
gegebenenfalls (J) Zuschlagstoffe.

Bei einer besonders bevorzugten Ausführungsform enthalten die erfindungsgemäßen Massen (M)
(A) 100 Gewichtsteile Verbindungen der Formel (I),
(B1) 200-1500 Gewichtsteile Füllstoffe (B1)
(B2) 10-500 Gewichtsteile Füllstoffe (B2)
(B3) 0-200 Gewichtsteile Füllstoffe (B3)
(C) 0,5-30 Gewichtsteile Organosiliciumverbindungen enthaltend Einheiten der Formel (V),
gegebenenfalls (D) nicht reaktive Weichmacher,
gegebenenfalls (E) Siliconharze
gegebenenfalls (F) Katalysatoren,
(G) 0,5-30 Gewichtsteile Wasserfänger
gegebenenfalls (G) Haftvermittler,
gegebenenfalls (H) Wasserfänger,
gegebenenfalls (I) Additive und
gegebenenfalls (J) Zuschlagstoffe.

Bei einer insbesondere bevorzugten Ausführungsform enthalten die erfindungsgemäßen Massen (M)
(A) 100 Gewichtsteile Verbindungen der Formel (I),
(B1) 300-1200 Gewichtsteile Füllstoffe (B1)
(B2) 50-400 Gewichtsteile Füllstoffe (B2)
(B3) 0-50 Gewichtsteile Füllstoffe (B3)
(C) 0,5-30 Gewichtsteile Organosiliciumverbindungen enthaltend Einheiten der Formel (V),
gegebenenfalls (D) nicht reaktive Weichmacher,
gegebenenfalls (E) Siliconharze
gegebenenfalls (F) Katalysatoren,
(G) 0,5-30 Gewichtsteile Vinyltrimethoxysilan und/oder Phenyltrimethoxysilan
gegebenenfalls (G) Haftvermittler,
gegebenenfalls (H) Wasserfänger,
gegebenenfalls (I) Additive und
gegebenenfalls (J) Zuschlagstoffe.

Bevorzugt enthalten die erfindungsgemäßen Massen (M) keine über die Komponenten (A) bis (J) hinausgehenden Komponenten. Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die erfindungsgemäßen, wärmeleitfähigen Massen (M) weisen vorzugsweise eine Wärmeleitfähigkeit von mindestens 1,0 W/mK, besonders bevorzugt von mindestens 2,0 W/mK und insbesondere bevorzugt von mindestens 3,5 W/mK auf.

Die Viskosität der erfindungsgemäßen Massen (M) kann in einem sehr breiten Bereich variieren und an die Erfordernisse der Anwendung angepasst werden.

Die Dichte der erfindungsgemäßen Massen (M) ist vorzugsweise kleiner 4,5 g/cm³, besonders bevorzugt kleiner 4,0 g/cm³, und insbesondere bevorzugt kleiner 3,3 g/cm³.

**Ein weiterer Gegenstand der vorliegenden Erfindung ist ein Verfahren zur Herstellung** der erfindungsgemäßen Massen (M) durch Vermischen der einzelnen Komponenten nach den üblichen kontinuierlichen- oder diskontinuierlichen Mischverfahren des Standes der Technik. Als Mischvorrichtung sind alle bekannten Vorrichtungen geeignet. Beispiele hierfür sind uniaxiale oder biaxiale kontinuierlicher Mischer, Doppelwalzen, Ross-Mischer, Hobart-Mischer, Dental-Mischer, Planetenmischer, Kneter und Henschel-Mischer oder ähnliche Mischer.

Die Herstellung der erfindungsgemäßen Massen (M) erfolgt vorzugsweise unter Ausschluss von Feuchtigkeit.

Bei den erfindungsgemäßen Massen (M) handelt es sich je nach Bedarf der jeweiligen Anwendung um einkomponentige vernetzbare Massen. Die erfindungsgemäß hergestellten Massen (M) können aber auch Teil von zweikomponentigen Vernetzungssystemen sein, bei denen in einer zweiten Komponente OH-haltige Verbindungen wie Wasser hinzugefügt werden.

Die erfindungsgemäßen Massen (M) sind bei Ausschluss von Wasser lagerfähig und bei Zutritt von Wasser vernetzbar.

**Ein weiterer Gegenstand der vorliegenden Erfindung** sind daher die durch Abfüllen oder Auftragen und anschließender Vernetzung/Härtung der vernetzbaren Massen (M) erhaltenen Silikonformkörper.

Für die Vernetzung der erfindungsgemäßen Massen (M) reicht der übliche Wassergehalt der Luft in vielen Fällen aus. Die Vernetzung der erfindungsgemäßen Massen (M) erfolgt vorzugsweise bei Raumtemperatur. Sie kann, falls erwünscht, auch bei höheren oder niedrigeren Temperaturen als Raumtemperatur, z.B. bei -5°C bis 15°C oder bei 30°C bis 50°C und/oder mittels den normalen Wassergehalt der Luft übersteigenden Konzentrationen von Wasser durchgeführt werden.

Vorzugsweise weisen die erfindungsgemäß hergestellten Formkörper eine Reißdehnung von mindestens 100%, besonders bevorzugt von mindestens 200%, jeweils gemessen nach DIN EN 53504-S1.

Bei den erfindungsgemäß hergestellten Formkörpern kann es sich um beliebige Formkörper handeln, wie etwa Dichtungen, Pressartikel, extrudierte Profile, Beschichtungen, Imprägnierungen, Verguss, Linsen, Prismen, polygone Strukturen, Laminat- oder Klebschichten.

**Ein weiterer Gegenstand der vorliegenden Erfindung ist die Verwendung** der erfindungsgemäßen wärmeleitfähigen Massen (M) als Thermoleitpaste, Gap Filler, Wärmeleitpad, wärmeleitfähige Klebstoffe und Vergussmassen.

Die erfindungsgemäßen wärmeleitfähigen Massen (M) eignen sich hierfür ausgezeichnet, da sie eine sehr gute Ableitung von Wärme von Wärmerzeugern oder Wärmeableitern in elektrischen und/oder elektronischen Apparaturen ermöglichen.

Dazu wird die erfindungsgemäße wärmeleitfähige Masse (M) auf Wärmeerzeuger oder Wärmeableiter aufgetragen, oder die bereits vernetzte oder gehärtete erfindungsgemäße wärmeleitfähige Masse (M) wird als Formkörper, beispielsweise als Wärmeleitpad, zwischen Wärmeerzeuger und/oder Wärmeableiter gebracht.

Typische Wärmeerzeuger findet man in elektrischen und elektronischen Apparaturen der Stromversorgungen und in elektronischen Geräten, wie bspw. Versorgungstransistoren, Leistungsmodulen, Transistoren, Thermokopplern und Temperatursensoren; wärmeerzeugenden elektronischen Teile, bspw. integrierten Schaltkreisteile wie CPUs und Batterien. Insbesondere findet man Wärmeerzeuger in der Automobilindustrie im Bereich der Lithium-Ionen-Batterien, der Ladeinfrastrukturen sowie der Steuergeräte und Sensorik. Geeignete Wärmeableiter umfassen wärmeableitende Bauteile wie Wärmeverteiler und Kühlkörper und Kühllamellen. Wenn die wärmeleitfähige Masse (M) zwischen einem Wärmeerzeuger und einem Wärmeableiter eingebracht wird, kann die Wärme effizient vom Wärmeerzeuger zum Wärmeableiter geleitet werden. Damit wird eine effektive Kühlwirkung des Wärmeerzeugers erreicht.

Die erfindungsgemäßen wärmeleitfähigen Massen (M) sind insbesondere zur Verwendung als Gap Filler für Lithium-Ionen-Batterien von Elektrofahrzeugen und als Vergussmasse für elektronische Bauteile, beispielsweise von Elektrofahrzeugen, geeignet.

Die nachfolgenden Beispiele beschreiben die Ausführbarkeit der vorliegenden Erfindung, ohne jedoch diese auf die darin offenbarten Inhalte zu beschränken.

Sofern nicht anders angegeben, werden sämtliche Arbeitsschritte in den nachstehenden Beispielen bei einem Druck der umgebenden Atmosphäre, also bei 1013 hPa, und bei Raumtemperatur, also bei 23°C, bzw. bei einer Temperatur, die sich beim Zusammengeben der Reaktanden bei Raumtemperatur ohne zusätzliche Heizung oder Kühlung einstellt, durchgeführt. Die Vernetzung der Massen (M) wird bei einer relativen Luftfeuchtigkeit von 50% durchgeführt. Des Weiteren beziehen sich alle Angaben von Teilen und Prozentsätzen, soweit nichts anderes angegeben ist, auf das Gewicht.

### Beispiele:

### Messung der Wärmeleitfähigkeit Lambda

Die Wärmeleitfähigkeit wird nach ASTM D5470-12 an einem TIM Tester (Steinbeis Transferzentrum Wärmemanagement in der Elektronik, Lindenstr. 13/1, 72141 Walddorfhäslach, Deutschland) bestimmt. Dabei wird der thermische Widerstand der Probe, die sich zwischen 2 Prüfzylindern befindet, durch einen konstanten Wärmefluss bestimmt. Über die Schichtdicke der Probe wird die effektive Wärmeleitfähigkeit berechnet.

Für die Messung wird die Probe mit Hilfe einer Schablone aufgetragen und die Messzylinder manuell auf eine Dicke von 1,9 - 2,0 mm zusammengefahren, danach überstehendes Material entfernt. Die Messung der Wärmeleitfähigkeit erfolgt bei konstantem Spalt von 1,8 - 1,6 - 1,4 - 1,2 - 1,0 mm. Die Auswertung erfolgt über eine integrierte Reporterstellung. Nach einer Plausibilitätsprüfung (Bestimmtheitsmaß der Gerade > 0,998) wird die thermische Leitfähigkeit als effektive Wärmeleitfähigkeit λ_{eff} in W/(mK) ausgegeben.

### Partikelgrößen- und Partikelformanalyse

Die Analyse der Partikelgröße (mittlerer Durchmesser x50), der Partikelgrößenverteilung (Parameter: Standardabweichung Sigma und Verteilungsbreite SPAN) und der Partikelform (Parameter: Aspekt-Verhältnis b/l) erfolgte mit einem Camsizer X2 von Retsch Technology (Messprinzip: Dynamische Bildanalyse) gemäß ISO 13322-2 und ISO 9276-6 (Art der Analyse: Trockenmessung von Pulvern und Granulaten; Messbereich: 0,8 µm bis 30 mm; Druckluftdispergierung mit "X-Jet"; Dispergierdruck = 0,3 bar). Die Auswertungen erfolgten volumenbasiert nach dem Modell x_{c min}.

### Beispiel 1: Herstellung einer Mischung aus silanterminierten Polypropylenglycolen als Komponente (A)

In einem 2000 ml Dreihalskolben mit Thermometer, Rückflusskühler, Rühr- und Heizmöglichkeiten werden 400,0 g (22,2 mMol) eines beidseitig hydroxyterminierten Polypropylenglycols mit einer zahlenmittleren Molmasse Mₙ von 18 000 g/Mol (käuflich erhältlich unter der Bezeichnung Acclaim^{®} 18200 von der Fa. Covestro AG, D-Leverkusen) vorgelegt und für 2 h bei 80°C und 1 mbar unter Rühren getrocknet. Danach wird das Vakuum mit Stickstoff gebrochen. Die gesamte folgende Reaktion wird unter einer Stickstoff-Schutzgasatmosphäre durchgeführt.

Zur Durchführung der Silanterminierung werden dem getrockneten Polyether bei 80°C zunächst 27,4 g (133,2 mmol) 3-Isocyanatopropyl-trimethoxysilan (käuflich erhältlich unter der Bezeichnung GENIOSIL^{®} GF40 von der Wacker Chemie AG, D-München) zugetropft und anschließend 0,31 g Borchi-Katalysator 315 (ein bismut-neodecanoat-haltiger Katalysator der Fa. Borchers) mittels einer Eppendorf-Pipette zugegeben. Direkt nach der Katalysatorzugabe kommt es zu einer Erwärmung der Reaktionsmischung auf 82-83°C. Danach wird bei einer Temperatur von 80°C gerührt.

Nach 60 min werden bei unveränderter Temperatur 484 g (96,8 mmol) eines monohydroxy-monobutoxy-terminierten Polypropylenglycols mit einer mittleren Molmasse Mₙ von 5000 g/Mol (käuflich erhältlich unter der Bezeichnung Preminol^{®} S 1005 bei der AGC Chemicals Europe, LTD, NL-Amsterdam) zugegeben. Anschließend wird für weitere 60 min bei 80 °C gerührt. Danach wird auf Raumtemperatur abgekühlt, und der Reaktionsmischung wird eine Probe entnommen und mittels IR-Analytik auf gegebenenfalls noch vorhandene Isocyanatosilanreste untersucht. Die Probe ist isocyanatfrei.

### Beispiel 2: Herstellung eines silanterminierten Polypropylenglycols als Komponente (A)

In einem 2000 ml Vierhalskolben mit Tropftrichter, Rückflusskühler, Thermometer, Rühr- und Heizmöglichkeit werden 1080 g (270 mmol eines beidseitig hydroxyterminierten Polypropylenglycols mit einer zahlenmittleren Molekülmasse von 4000 g/mol (Acclaim^{®} 4200, käuflich erhältlich bei der Fa. Covestro AG, D-Leverkusen), vorgelegt und für 2 h bei 80°C und 1 mbar unter Rühren getrocknet. Danach wird das Vakuum mit Stickstoff gebrochen. Die gesamte folgende Reaktion wird unter einer Stickstoff-Schutzgasatmosphäre durchgeführt.

Zur Durchführung der Silanterminierung werden dem getrockneten Polyether bei 80°C innerhalb von 15 min 91,4 g (567 mmol) α-Isocyanatomethyl-methyldimethoxysilan (GENIOSIL^{®} XL 42, käuflich erhältlich bei der Wacker Chemie AG, D-München) unter Rühren zugetropft. Die Temperatur bleibt dabei bei 80 °C. Danach werden 0,17 g Borchi-Katalysator 315 (ein bismut-neodecanoathaltiger Katalysator der Fa. Borchers) mittels einer Eppendorf-Pipette zugegeben. Dies entspricht einem Wert von 150 ppm Katalysator bezogen auf das Gesamtgewicht der Reaktionsmischung. Dabei kommt es zu einer geringfügigen Erwärmung der Reaktionsmischung (< 5 °C). Anschließend wird für 2 h bei 80 °C gerührt. Im IR-Spektrum der Reaktionsmasse ist danach noch ein kleiner Isocyanat-Peak vorhanden.

Anschließend werden bei unveränderter Temperatur 18,9 g (54 mmol) eines monohydroxy-monomethoxy-terminierten Polyethylenglycols mit einer mittleren Molmasse Mₙ von 350 g/Mol (käuflich erhältlich unter der Bezeichnung PEG 350M bei der Fa. Clariant, D-Gendorf) zugegeben. Anschließend wird für weitere 15 min bei 80 °C gerührt. Danach wird auf Raumtemperatur abgekühlt, und der Reaktionsmischung wird eine Probe entnommen und mittels IR-Analytik auf gegebenenfalls noch vorhandene Isocyanatosilanreste untersucht. Die Probe ist isocyanatfrei.

### Beispiel 3a: Herstellung einer erfindungsgemäßen wärmeleitfähigen Masse (M)

34 g eines einseitig silanterminierten Polypropylenglycols mit einer mittleren Molmasse (Mₙ) von 5000 g/mol und Endgruppen der Formel -O-C(=O)-NH-(CH₂)₃-Si(OCH₃)₃ (käuflich erhältlich unter der Bezeichnung GENIOSIL^{®} XM25 bei der Wacker Chemie AG, D-München), werden in einem Laborplanetenmischer der Fa. PC-Laborsystem, ausgestattet mit zwei Balkenmischern, bei ca. 25°C mit 4,8 g Vinyltrimethoxysilan und 1,0 g einer Stabilisatormischung (Mischung aus 20% Irganox^{®} 1135 (CAS-Nr. 125643-61-0), 40% Tinuvin^{®} 571 (CAS-NR. 23328-53-2) und 40% Tinuvin^{®} 765 (CAS-NR. 41556-26-7), käuflich erhältlich unter der Bezeichnung TINUVIN^{®} B 75 bei der BASF SE, Deutschland) für 2 Minuten bei 200 U/min homogenisiert.

Danach werden sukzessive 136 g überwiegend rundliche Siliziumpartikel mit einem mittleren Durchmesser x50 von 49,1 µm, einer Verteilungsbreite SPAN von 0,96 (x10 = 21,8 µm; X90 = 69,0 µm) und einem Aspekt-Verhältnis b/l von 0,86, 136 g überwiegend rundliche Siliziumpartikel mit einem mittleren Durchmesser x50 von 82,9 µm einer Verteilungsbreite SPAN von 0,85 (x10 = 55,7 µm; X90 = 125,8 µm) und einem Aspekt-Verhältnis b/l von 0,83 und 87 g Zinkoxid (käuflich erhältlich unter der Bezeichnung Zinc Oxide Grade AZO 66 von der Firma U.S. Zinc, US-Houston) unter Rühren eine Minute bei 600 U/min aufgeschlossen. Schließlich werden 1,2 g N-(2-Aminoethyl)-3-aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die fertige Masse wird in luftdicht verschließbare Gebinde abgefüllt. Sie ist für eine Verwendung unter anderem als wärmeleitfähiger Klebstoff, Gap Filler, Vergussmasse oder im ausgehärteten Zustand als Wärmeleitpad geeignet.

### Beispiel 3b: Herstellung einer erfindungsgemäßen wärmeleitfähigen Masse (M)

Es wird so vorgegangen wie in Beispiel 3a, jedoch werden anstelle von 34 g GENIOSIL^{®} XM 25 dieselbe Menge der in Beispiel 1 hergestellten Mischung aus silanterminierten Polypropylenglycolen als Komponente (A) eingesetzt.

Auch hier wird die fertige Masse in luftdicht verschließbare Gebinde abgefüllt und ist für eine Verwendung unter anderem als wärmeleitfähiger Klebstoff, Gap Filler, Vergussmasse oder im ausgehärteten Zustand als Wärmeleitpad geeignet.

### Beispiel 3c: Herstellung einer erfindungsgemäßen wärmeleitfähigen Masse (M)

Es wird so vorgegangen wie in Beispiel 3a, jedoch werden anstelle von 34 g GENIOSIL^{®} XM 25 dieselbe Menge des in Beispiel 2 hergestellten silanterminierten Polypropylenglycols als Komponente (A) eingesetzt.

Auch hier wird die fertige Masse in luftdicht verschließbare Gebinde abgefüllt und ist für eine Verwendung unter anderem als wärmeleitfähiger Klebstoff, Gap Filler, Vergussmasse oder im ausgehärteten Zustand als Wärmeleitpad geeignet.

### Vergleichsbeispiel 1a: Herstellung einer nicht erfindungsgemäßen feuchtehärtbaren Masse

95,8 g GENIOSIL^{®} XM25 werden in einem Laborplanetenmischer der Fa. PC-Laborsystem, ausgestattet mit zwei Balkenmischern, bei ca. 25°C mit 2,0 g Vinyltrimethoxysilan, 1,0 g einer Stabilisatormischung (Mischung aus 20% Irganox^{®} 1135 (CAS-Nr. 125643-61-0), 40% Tinuvin^{®} 571 (CAS-NR. 23328-53-2) und 40% Tinuvin^{®} 765 (CAS-NR. 41556-26-7), käuflich erhältlich unter der Bezeichnung TINUVIN^{®} B 75 bei der BASF SE, Deutschland), 1,0 g *N*-(2-Aminoethyl)-3-aminopropyl-trimethoxysilan und 0,2 g Dioctylzinndilaurat für 2 Minuten bei 200 U/min homogenisiert.

Die fertige Masse wird in luftdicht verschließbare Gebinde abgefüllt.

### Vergleichsbeispiel 1b: Herstellung einer nicht erfindungsgemäßen, feuchtehärtbaren Masse

Es wird so vorgegangen wie in Vergleichsbeispiel 1a, jedoch wird anstelle des GENIOSIL^{®} SX 25 dieselbe Menge der in Beispiel 1 hergestellten Mischung aus silanterminierten Polypropylenglycolen als Komponente (A) eingesetzt.

Auch hier wird die fertige Masse in ein luftdicht verschließbares Gebinde abgefüllt.

### Vergleichsbeispiel 1c: Herstellung einer nicht erfindungsgemäßen, feuchtehärtbaren Masse

Es wird so vorgegangen wie in Vergleichsbeispiel 1a, jedoch wird anstelle des GENIOSIL^{®} SX 25 dieselbe Menge des in Beispiel 2 hergestellten silanterminierten Polypropylenglycols als Komponente (A) eingesetzt.

### Vergleichsbeispiel 2a: Herstellung einer nicht erfindungsgemäßen, wärmeleitfähigen Masse

34 g GENIOSIL^{®} XM25 werden in einem Laborplanetenmischer der Fa. PC-Laborsystem, ausgestattet mit zwei Balkenmischern, bei ca. 25°C mit 4,8 g Vinyltrimethoxysilan und 1,0 g einer Stabilisatormischung (Mischung aus 20% Irganox^{®} 1135 (CAS-Nr. 125643-61-0), 40% Tinuvin^{®} 571 (CAS-NR. 23328-53-2) und 40% Tinuvin^{®} 765 (CAS-NR. 41556-26-7), käuflich erhältlich unter der Bezeichnung TINUVIN^{®} B 75 bei der BASF SE, Deutschland) für 2 Minuten bei 200 U/min homogenisiert.

Danach werden sukzessive 136 g überwiegend rundliche Aluminiumoxidepartikel mit einem mittleren Durchmesser x50 von 50 µm (käuflich erhältlich unter der Bezeichnung Alunabeads^{™} CB A50 von der Firma Showa Denko, JP-Tokyo), 136 g eines calcinierten Aluminiumoxides mit einem mittleren Durchmesser x50 von 3 µm (käuflich erhältlich unter der Bezeichnung Alumina CL 3000 SG von der Firma Almatis, D-Ludwigshafen) und 87 g Zinkoxid (käuflich erhältlich unter der Bezeichnung Zinc Oxide Grade AZO 66 von der Firma U.S. Zinc, US-Houston) unter Rühren eine Minute bei 600 U/min aufgeschlossen. Schließlich werden 1,2 g *N*-(2-Aminoethyl)-3-aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die fertige Masse wird in luftdicht verschließbare Gebinde abgefüllt.

### Vergleichsbeispiel 2b: Herstellung einer nicht erfindungsgemäßen wärmeleitfähigen Masse (M)

Es wird so vorgegangen wie in Vergleichsbeispiel 2a, jedoch werden anstelle von 34 g GENIOSIL^{®} SX 25 dieselbe Menge der in Beispiel 1 hergestellten Mischung aus silanterminierten Polypropylenglycolen als Komponente (A) eingesetzt.

Auch hier wird die fertige Masse in luftdicht verschließbare Gebinde abgefüllt.

### Vergleichsbeispiel 2c: Herstellung einer nicht erfindungsgemäßen wärmeleitfähigen Masse (M)

Es wird so vorgegangen wie in Vergleichsbeispiel 2a, jedoch werden anstelle von 34 g GENIOSIL^{®} SX 25 dieselbe Menge des in Beispiel 2 hergestellten silanterminierten Polypropylenglycols als Komponente (A) eingesetzt.

Auch hier wird die fertige Masse in luftdicht verschließbare Gebinde abgefüllt.

### Beispiel 4: Messung der Wärmeleitfähigkeit

Die Wärmeleitfähigkeit der in den Beispielen 3a bis 3c sowie den Vergleichsbeispielen 1a bis 1c und 2a bis 2c hergestellten Massen (M) wird wie oben beschrieben gemessen. Die Ergebnisse finden sich in Tabelle 1.

**Tabelle 1**

| **Masse (M)** | **Wärmeleitfähigkeit λ_{eff} [W/mK]** |
|---|---|
| Beispiel 3a | 4, 5 |
| Beispiel 3b | 4, 3 |
| Beispiel 3c | 4, 6 |
| Vergleichsbeispiel 1a | 0, 17 |
| Vergleichsbeispiel 1b | 0,17 |
| Vergleichsbeispiel 1c | 0, 16 |
| Vergleichsbeispiel 2a | 3, 0 |
| Vergleichsbeispiel 2b | 2, 8 |
| Vergleichsbeispiel 2c | 3, 1 |

### Beispiel 5: Bestimmung der Eigenschaften der Proben aus den Beispielen 3b und 3c

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird alle 5 min die Bildung einer Haut getestet. Dazu wird ein trockener Laborspatel vorsichtig auf die Oberfläche der Probe aufgesetzt und nach oben gezogen. Bleibt Probe am Spatel kleben, hat sich noch keine Haut gebildet. Bleibt keine Probe am Spatel mehr kleben, so hat sich eine Haut gebildet und die Zeit wird notiert. Die Ergebnisse finden sich in Tabelle 2.

### Mechanische Eigenschaften

Die Massen wurden jeweils auf ausgefrästen Teflonplatten mit 2 mm Tiefe ausgestrichen und 2 Wochen bei 23°C, 50 rel. Luftfeuchte gehärtet.

Die Shore-A-Härte wird gemäß DIN EN 53505 bestimmt.

Die Reißfestigkeit wird gemäß DIN EN 53504-S1 bestimmt.

Die Reißdehnung wird gemäß DIN EN 53504-S1 bestimmt.

Die Ergebnisse finden sich in Tabelle 2.

**Tabelle 2**

| **Masse aus Beispiel** | **3b** | **3c** |
|---|---|---|
| HBZ [min] | 23 | 17 |
| Shore-A-Härte | 96 | 98 |
| Reißfestigkeit [N/mm²] | 3,5 | 4, 0 |
| Reißdehnung [%] | 15 | 10 |

## Patentansprüche

1. Vernetzbare, wärmeleitfähige Massen (M) enthaltend 100 Gewichtsteile mindestens einer Verbindungen (A) der Formel
Y-[(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen organischen Polymerrest bedeutet,
R gleich oder verschieden seinkann und einen einwertigen, gegebenenfalls substituierten Kohlenwasserstoffrest darstellt, R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder eine Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist, und
a gleich oder verschieden sein kann und 0, 1 oder 2 ist, und
b gleich oder verschieden sein kann und eine ganze Zahl von 1 bis 10 ist, und
100 bis 1900 Gewichtsteilen mindestens eines Füllstoffes (B),
wobei mindestens 30 Gew.-% aller Füllstoffe (B) aus metallischen Siliziumpartikeln (B1) bestehen.

2. Vernetzbare, wärmeleitfähige Massen (M) gemäß Anspruch 1, **dadurch gekennzeichnet, dass** mindestens 40 Gew.-% aller Füllstoffe (B) aus metallischen Siliziumpartikeln (B1) bestehen.

3. Vernetzbare, wärmeleitfähige Massen (M) gemäß einem der Ansprüche 1 oder 2, **dadurch gekennzeichnet, dass** Füllstoffe (B) mindestens einen weiteren thermisch leitfähigen Füllstoff (B2) enthält, der aus Materialien besteht, die eine Wärmeleitfähigkeit, gemessen nach der in der Beschreibung angegebenen Methode, von mindestens 5 W/mK aufweisen.

4. Vernetzbare, wärmeleitfähige Massen (M) gemäß Anspruch 3, **dadurch gekennzeichnet, dass** mindestens 60 Gew.-% der Füllstoffe (B) aus metallischen Siliziumpartikeln (B1) und weiteren Füllstoffen (B2) bestehen.

5. Vernetzbare, wärmeleitfähige Massen (M) gemäß einem der Ansprüche 1 bis 4, **dadurch gekennzeichnet, dass** die Siliziumpartikel (B1) weniger als 20 Gew.-% einer Partikelfraktion, gemessen nach der in der Beschreibung angegebenen Methode, mit einem Durchmesser von kleiner oder gleich 20 µm enthalten, bezogen auf die Gesamtmenge an Siliziumpartikeln (B1).

6. Verfahren zur Herstellung der vernetzbaren, wärmeleitfähigen Massen (M) gemäß einem der Ansprüche 1 bis 5, **dadurch gekennzeichnet, dass** die einzelnen Komponenten kontinuierlich oder diskontinuierlich vermischt werden.

7. Verfahren gemäß Anspruch 6 **dadurch gekennzeichnet, dass** die Herstellung unter Ausschluss von Feuchtigkeit erfolgt.

8. Silikonformkörper erhältlich durch Abfüllen oder Auftragen und anschließender Vernetzung/Härtung der vernetzbaren, wärmeleitfähigen Massen (M) gemäß einem der Ansprüche 1 bis 5.

9. Verwendung der vernetzbaren, wärmeleitfähigen Massen (M) gemäß einem der Ansprüche 1 bis 5 als Thermoleitpaste, Gap Filler, wärmeleitfähige Klebstoffe und Vergussmassen.

10. Verwendung der Silikonformkörper gemäß Anspruch 8 als Wärmeleitpad.

## Claims

1. A crosslinkable, thermally conductive composition (M) comprising:
100 parts by weight of at least one compound (A) of the formula
Y-[(CR¹₂)_{b}-SiRₐ(OR²)₃₋ₐ]ₓ (I),
where
Y is an x-valent organic polymer radical attached via nitrogen, oxygen, sulfur or carbon,
R may be identical or different and is a monovalent, optionally substituted hydrocarbon radical,
R¹ may be identical or different and is a hydrogen atom or a monovalent, optionally substituted hydrocarbon radical that can be attached to the carbon atom via nitrogen, phosphorus, oxygen, sulfur or a carbonyl group,
R² may be identical or different and is a hydrogen atom or a monovalent, optionally substituted hydrocarbon radical,
x is an integer from 1 to 10, and
a may be identical or different and is 0, 1 or 2, and
b may be identical or different and is an integer from 1 to 10, and
100 to 1900 parts by weight of at least one filler (B),
where at least 30% by weight of all fillers (B) consists of metallic silicon particles (B1).

2. The crosslinkable, thermally conductive composition (M) as claimed in claim 1, **characterized in that** at least 40% by weight of all fillers (B) consist of metallic silicon particles (B1).

3. The crosslinkable, thermally conductive composition (M) as claimed in either of claims 1 or 2, **characterized in that** fillers (B) comprise at least one further thermally conductive filler (B2) that consists of materials having a thermal conductivity of at least 5 W/mK.

4. The crosslinkable, thermally conductive composition (M) as claimed in claim 3, **characterized in that** at least 60% by weight of the fillers (B) consists of metallic silicon particles (B1) and further fillers (B2).

5. The crosslinkable, thermally conductive composition (M) as claimed in any of claims 1 to 4, **characterized in that** the silicon particles (B1) contain less than 20% by weight of a particle fraction having a diameter of less than or equal to 20 µm, based on the total amount of silicon particles (B1).

6. A process for producing the crosslinkable, thermally conductive composition (M) as claimed in any of claims 1 to 5, **characterized in that** the individual components are mixed continuously or discontinuously.

7. The process as claimed in claim 6, **characterized in that** production takes place with exclusion of moisture.

8. A silicone shaped article obtainable by filling or applying and then crosslinking/curing the crosslinkable, thermally conductive composition (M) as claimed in any of claims 1 to 5.

9. The use of the crosslinkable, thermally conductive composition (M) as claimed in any of claims 1 to 5 as thermally conductive paste, gap filler, thermally conductive adhesives, and potting compounds.

10. The use of the silicone shaped article as claimed in claim 8 as a thermally conductive pad.

## Revendications

1. Masses (M) réticulables thermoconductrices contenant 100 parties en poids d'au moins un composé (A) de formule
Y-[(CR¹₂)_{b}-SiRₐ(OR²)₃₋ₐ]ₓ (I),
dans laquelle
Y signifie un radical polymère organique x-valent lié par un atome d'azote, d'oxygène, de soufre ou de carbone,
R peut être égal ou différent et représente le cas échéant un radical hydrocarboné éventuellement substitué, monovalent,
R¹ peut être identique ou différent et représente un atome d'hydrogène ou un radical hydrocarboné monovalent, éventuellement substitué, qui peut être lié à l'atome de carbone par un atome d'azote, de phosphore, d'oxygène, de soufre ou un groupe carbonyle,
R² peut être identique ou différent et représente un atome d'hydrogène ou un radical hydrocarboné monovalent, éventuellement substitué,
x est un nombre entier valant de 1 à 10, et
a peut être identique ou différent et est 0, 1 ou 2, et b peut être identique ou différent et est un nombre entier de 1 à 10, et
100 à 1 900 parties en poids d'au moins une charge (B), au moins 30 % en poids de toutes les charges (B) étant constituées de particules de silicium (B1) métalliques.

2. Masses (M) réticulables thermoconductrices selon la revendication 1, **caractérisées en ce qu'**au moins 40 % en poids de toutes les charges (B) sont constituées de particules de silicium (B1) métalliques.

3. Masses (M) réticulables thermoconductrices selon l'une quelconque des revendications 1 et 2, **caractérisées en ce que** les charges (B) contiennent au moins une autre charge (B2) thermoconductrice, qui est constituée de matériaux qui présentent une conductivité thermique d'au moins 5 W/mK, mesurée selon le procédé spécifié dans la description.

4. Masses (M) réticulables thermoconductrices selon la revendication 3, **caractérisées en ce qu'**au moins 60 % en poids des charges (B) sont constituées de particules de silicium (B1) métalliques et d'autres charges (B2).

5. Masses (M) réticulables thermoconductrices selon l'une quelconque des revendications 1 à 4, **caractérisées en ce que** les particules de silicium (B1) contiennent moins de 20 % en poids d'une fraction de particules, mesurée selon le procédé spécifié dans la description, dotées d'un diamètre inférieur ou égal à 20 µm, par rapport à la quantité totale de particules de silicium (B1).

6. Procédé de fabrication des masses (M) réticulables thermoconductrices selon l'une quelconque des revendications 1 à 5, **caractérisé en ce que** les composants individuels sont mélangés de manière continue ou de manière discontinue.

7. Procédé selon la revendication 6, **caractérisé en ce que** la préparation est réalisée à l'abri de l'humidité.

8. Corps moulés de silicone pouvant être obtenus par remplissage ou application et ensuite réticulation/durcissement des masses (M) réticulables thermoconductrices selon l'une quelconque des revendications 1 à 5.

9. Utilisation des masses (M) réticulables thermoconductrices selon l'une quelconque des revendications 1 à 5 en tant que pâte thermoconductrice, bouche-trou, adhésifs thermoconducteurs et masses de coulée.

10. Utilisation des corps moulés de silicone selon la revendication 8 en tant que coussin thermique.
